(19) **Europäisches Patentamt European Patent Office Office européen des brevets**

(11) **EP 3 703 506 B1**

(12) **EUROPEAN PATENT SPECIFICATION**

(45) Date of publication and mention of the grant of the patent:
**12.03.2025 Bulletin 2025/11**

(21) Application number: **18812384.8**

(22) Date of filing: **31.10.2018**

(51) International Patent Classification (IPC):
*A23J 3/22* *(2006.01)*     *A23J 3/28* *(2006.01)*
*A23J 3/14* *(2006.01)*     *A23J 1/16* *(2006.01)*
*A23J 1/00* *(2006.01)*     *A23L 29/262* *(2016.01)*

(52) Cooperative Patent Classification (CPC):
**A23L 29/262; A23J 1/006; A23J 1/16; A23J 3/14; A23J 3/22; A23J 3/28**

(86) International application number:
**PCT/NL2018/050726**

(87) International publication number:
**WO 2019/088834 (09.05.2019 Gazette 2019/19)**

(54) **POTATO PROTEIN BASED FIBROUS STRUCTURES AND FOOD ITEMS COMPRISING THE SAME**

AUF KARTOFFELPROTEIN BASIERENDE FASERIGE STRUKTUREN UND DIESE ENTHALTENDE LEBENSMITTEL

STRUCTURES FIBREUSES À BASE DE PROTÉINE DE POMME DE TERRE ET ARTICLES ALIMENTAIRES COMPRENANT CELLES-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2017 EP 17199381**

(43) Date of publication of application:
**09.09.2020 Bulletin 2020/37**

(73) Proprietor: **Coöperatie Koninklijke Avebe U.A. 9641 GK Veendam (NL)**

(72) Inventors:
• **ZHU, Sicong**
**3902 KK Veenendaal (NL)**
• **PHAN, Vân Anh**
**9641 GK Veendam (NL)**
• **LAUS, Marc Christiaan**
**9641 GK Veendam (NL)**

(74) Representative: **V.O.**
**P.O. Box 87930**
**2508 DH Den Haag (NL)**

(56) References cited:
WO-A1-2008/069650     WO-A2-2014/111103
PL-B1- 228 136     US-A- 3 833 744
US-A- 4 885 179

• **DATABASE BIOSIS [online] BIOSCIENCES INFORMATION SERVICE, PHILADELPHIA, PA, US; 1991, GONZALEZ J M ET AL: "RECOVERY OF PROTEIN FROM POTATO PLANT WASTE EFFLUENTS BY COMPLEXATION WITH CARBOXYMETHYLCELLULOSE", Database accession no. PREV199191117992**
• **GONZALEZ J M ET AL: "RECOVERY OF PROTEIN FROM POTATO PLANT WASTE EFFLUENTS BY COMPLEXATION WITH CARBOXYMETHYLCELLULOSE", FOOD HYDROCOLLOIDS, vol. 4, no. 5, 1991, pages 355 - 364, XP002776662, ISSN: 0268-005X, DOI: 10.1016/S0268-005X(09)80131-8**
• **DATABASE FSTA [online] INTERNATIONAL FOOD INFORMATION SERVICE (IFIS), FRANkFURT-MAIN, DE; ANONYMOUS: "Potato wastes: hidden profits in those mountains of peels?", Database accession no. FS-1987-02-J-0059**

EP 3 703 506 B1

- vol. 57, no. 1, FOOD ENGINEERING 1985, pages 135
- DATABASE FSTA [online] INTERNATIONAL FOOD INFORMATION SERVICE (IFIS), FRANkFURT-MAIN, DE; GONZALEZ J M ET AL: "Recovery of protein from potato plant waste effluents by complexation with carboxymethylcellulose.", Database accession no. FS-1992-08-J-0090
- vol. 4, no. 5, FOOD HYDROCOLLOIDS 1991 BROMO INDUSTRIAL, SANTO DOMINGO, DOMINICAN REPUBLIC, pages 355
- GONZALEZ J M ET AL: "Recovery of protein from potato plant waste effluents by complexation with carboxymethylcellulose.", FOOD HYDROCOLLOIDS, vol. 4, no. 5, 1991, pages 355 - 363, XP002776663

- C. A. KUMSAH ET AL: "The interaction between sodium carboxymethylcellulose and water", JOURNAL OF SOLUTION CHEMISTRY, vol. 5, no. 11, 1 November 1976 (1976-11-01), US, pages 799 - 806, XP055434697, ISSN: 0095-9782, DOI: 10.1007/BF00651490

Remarks:
The file contains technical information submitted after the application was filed and not included in this specification

## Description

The invention relates to the manufacture of food and food ingredients. More in particular, it relates to plant-based fibrous structures for use in vegan products such as meat analogous.

During recent years, booming "vegan products" appear in the market. Such products attracts not only vegan consumers, but also those flexitarian. Meat analogues, which plays an important role in vegan diet, call for great attention.

Soy often becomes a popular alternative to dairy and meat products for those who consume a mainly plant based diet. Soy food products offer vegans a high quality source of protein, as well as an available source of iron and calcium. In the current market, most meat analogues are based on texturized soy. Such products usually goes through extrusion process, which reformulate soy proteins under extreme conditions such as high heat and/or high pressure. Although they offer fibrous texture which resembles the texture of meat, a point of concern is the fact that soy protein is an allergen source and potential GMO source.

Soy is one of the most difficult products for allergy sufferers to avoid Soy, along with cow's milk, eggs, peanuts, tree nuts, wheat, fish, and shellfish, make up the "big eight" allergens. These are responsible for 90 percent of all food allergies, according to the Cleveland Clinic. A soy allergy occurs when the body's immune system mistakes the harmless proteins found in soy for invaders and creates antibodies against them. The next time a soy product is consumed, the immune system will release chemicals such as histamines to "protect" the body. The release of these chemicals causes an allergic reaction.

The present inventors therefore set out to provide a plant-based fibrous structure which is suitable for use as texturizing agent in food items, e.g. meat analogs, and which does not suffer from the risk of inducing allergies.

It was surprisingly found that a non-denatured (native) potato protein isolate can form strong (i.e. meat-like) fibres in a complex with CMC under acidic conditions , which fibers are suitably incorporated into various food items such as meat analogues. Potato is cultivated and consumed worldwide, and it is the world's fourth most important crop after rice, wheat and corn. Allergy to potato proteins (or other constituents thereof) is uncommon. Herewith, the present invention provides an attractive alternative for known plant-based fibrous structures, in particular those relying on soy protein.

Provided herein is a method for the manufacture of an edible protein-based fibrous structure, comprising contacting an aqueous solution of a non-denatured potato protein with a carboxy methyl cellulose (CMC) having a Mw of at least 150,000 Dalton (Da) to yield a fiber forming solution, which fiber forming solution has a total dry matter (TDM) content in the range of 0.5 to 15%, and wherein said contacting is performed in the pH range of 2 to 5 and while mixing to allow for /induce the formation of a potato protein-based edible fibrous structure. It was found that a method of the invention can be put into practice in various ways. For instance, one can make fibrous structures by the acidification of a neutral potato protein-CMC solution. Alternatively, it may comprise mixing an acidic potato protein solution and with a CMC solution.

Accordingly, in one embodiment the invention provides a method for the manufacture of an edible protein-based fibrous structure, comprising the steps of

- providing a fiber forming solution comprising non-denatured potato protein and (a solution of) carboxy methyl cellulose (CMC) having a Mw of at least 150,000 Dalton (Da) and a total dry matter (TDM) content in the range of 0.5 to 15%; and
- acidifying said fiber forming solution to a pH in the range of 2-5 while mixing, thereby inducing the formation of potato protein-based edible fibrous structure.

In another embodiment, the invention provides a method for the manufacture of an edible protein-based fibrous structure, comprising the steps of

- contacting an aqueous solution of a non-denatured potato protein having a pH in the range 2 to 5 with (a solution of) a carboxy methyl cellulose (CMC) having a Mw of at least 150,000 Dalton (Da) to obtain a fiber forming solution having a total dry matter (TDM) content in the range of 0.5 to 15% ; and wherein said contacting is performed while mixing, thereby inducing the formation of potato protein-based edible fibrous structure.

Also provided is an edible protein-based fibrous structure obtainable by a method according to the invention, and the use thereof in a food item.

A method or fibrous structure as shown herein is not known or suggested in the art. The prior art teaches that xanthan, alginate and pectin are able to form a fibrillar or fibrous structure with several proteins, including whey protein, soy protein and egg albumin. See for example US3,792,175, US4,885,179 and US3,829,587. However, there is no disclosure of a fibrous structure formed on the basis of potato protein in said documents. WO2014/111103 suggests the formation of fibrous structures using plant proteins such as potato protein, alginate, methylcellulose and micellar casein for use in meat replacer products.

Gonzalez et al., (Food Hydrocolloids Vol. 4 no. 5 pp.355-363, 1991) reported the recovery from potato protein from potato plant waste effluent by complexation with CMC. However, since the total dry matter of the (simulated) waste effluent is below 0.45%, no fibrous structures according to the present invention was observed.

Potato tuber proteins can be classified in many different groups. Lindner et al. 1980 proposed to use a classification of potato proteins into just two separate groups; acid soluble and acid coagulable potato proteins. The acid coagulable fraction was shown by the author to be dominated by High Molecular Weight (HMW) proteins in the range of 32 - 87 kDa based on SDS-PAGE analysis. Similarly the acid soluble protein fraction was shown to be dominated by Low Molecular Weight (LMW) proteins in the range of 17 - 27 kDa proteins. This classification in acid soluble and acid coagulable proteins at the same time groups acidic proteins (acid coagulable / HMW) from basic proteins (acid soluble / LMW) (Ralet & Gueguen 2000). The applicant typically produces these same two potato protein fractions under non-denaturing conditions by means of mixed-mode chromatography referred to as Solanic 200 and Solanic 300. Importantly however, a range of alternative purification methods can be used to obtain at least one of these native potato protein fractions.

Native protein purification methods employ mild processing conditions to avoid denaturation and largely maintain the secondary and tertiary structure of the protein. These mild conditions avoid the use of extreme pH, temperature and other denaturation conditions in order to retain the solubility of the protein. The intrinsic biochemical characteristics of a specific protein fraction largely determines whether the protein is either sensitive or resistant to the conditions in the protein isolation process. For example the high molecular weight fraction is more thermal sensitive resulting in insoluble protein aggregates at temperatures of 30°C or above. The low molecular weight fraction is more temperature resistant and can resist temperatures over 45°C (Bartova 2008). Similarly, the high molecular weight fraction aggregates and precipitates at pH values in the range of 3 to 5 while the low molecular weight fraction is largely soluble in this pH range. This allows the use of pH or temperature or a combination thereof to specifically coagulate and subsequently precipitate one protein fraction while maintaining the native character of the other.

Examples of native Acid soluble/ LMW/ basic/ Solanic 300 purification methods (but not limited to):

- Acid coagulation of HMW proteins followed by ultrafiltration & dia-filtration of the soluble LMW proteins (Lindner 1980)
- Fractionated thermal coagulation of HMW protein followed by ultrafiltration & dia-filtration of the soluble LMW proteins (for example pH 6,0; 30 minutes at 50°C)
- Adsorption chromatography at a specific pH value:

  - Adsorption / desorption from bentonite type material (Ralla 2012)
  - Ion exchange chromatography using SP-sepharose resin (Ralet & Gueguen 2000)
  - Membrane adsorption chromatography (Graf 2009)
  - Expanded bed adsorption chromatography (Lokra 2009, WO 2008/069650))

According to the invention, the native potato protein for use as fiber forming agent preferably comprises a low molecular weight potato protein isolate. In one embodiment, the native potato protein isolate has an isoelectric point above 5.5, preferably above 5.8, a molecular weight of below 35 kDa, preferably of 4- 30 kDa as determined by SDS-PAGE, and a glycoalkaloid concentration of less than 300 ppm.

In one embodiment, the non-denatured potato protein for use in the present invention is obtained by centrifuging a flocculated potato fruit juice, thereby forming a supernatant; subjecting the supernatant to adsorption chromatography operated at a pH of less than 11 and a temperature of 5-35 °C using a mixed-mode adsorbent capable of binding potato protein, thereby adsorbing the native potato protein to the adsorbent; and eluting the low molecular weight potato protein isolate, typically at acidic pH (for example between pH 1 and 3), or at a pH of 5.8 - 12.0. For details see for example WO2008/069650 in the name of the applicant.

A suitable low molecular weight potato protein isolate is obtainable by centrifuging a flocculated potato fruit juice, thereby forming a supernatant; subjecting the supernatant to adsorption chromatography operated at a pH of less than 11 and a temperature of 5-35 °C using a mixed-mode adsorbent capable of binding potato protein, thereby adsorbing the native potato protein to the adsorbent; and eluting the low molecular weight potato protein isolate.

In a specific aspect, the potato protein is a fraction obtained or obtainable under non-denaturing conditions by means of mixed-mode chromatography, for example protein isolates known in the art as Solanic 200 or Solanic 300.

According to the invention, a fiber forming solution is formed by mixing a non-denatured potato protein and carboxy methyl cellulose (CMC) having a Mw of at least 150,000 Da, preferably at least 400,000 Da. CMC stands for carboxymethylcellulose. However, CMC is more correctly the sodium salt of carboxymethylcellulose. It is derived from cellulose, which is made water-soluble by a chemical reaction. The water-solubility is achieved by introducing carboxymethyl groups along the cellulose chain, which makes hydration of the molecule possible. CMC is produced from cellulose and monochloroacetic acid (MCA) and with sodium hydroxide (NaOH) as the third essential ingredient. CMC products range from low molecular weight to high molecular weight polymers. The solutions behave, consequently, from almost Newtonian to increasingly pseudoplastic, meaning that the viscosity will change when different physical forces are imposed on it. The viscosity is proportional to the average chain length of the CMC molecule or the degree of polymerization. The molecular weight of the CMC grade is determined by the average chain length and the degree of substitution. The viscosity increases rapidly with increasing degree of polymerization.

In one embodiment of the invention, the CMC used has a Mw of at least 150,000 Da, preferably at least 400,000 Da, more preferably at least 750,000 Da.

Very good results are obtained when the fiber forming solution comprises non-denatured potato protein and CMC in a relative weight ratio of 3:1 to 15:1, preferably 8:1 to 12:1. The total dry matter (TDM) content of the fiber forming solution lies in the range of 0.5 to 15%, preferably 1 to 10%.

Also provided is a fiber forming solution according to the invention comprising non-denatured potato protein and carboxy methyl cellulose (CMC) having a Mw of at least 150,000 Da, preferably 400,000.

In a method of the invention, acidification is required in order to obtain the formation of potato protein-CMC fibrous structure. An important aspect is that the final pH of the fiber forming solution is in the range of 2 to 5. This can be achieved in different ways. For example, the pH of the fiber forming solution comprising potato protein and CMC is neutral (at least pH 7), which solution is then acidified to a pH in the range of 2-5 by the addition of (e.g. mineral or organic) acid while mixing to allow for the formation of potato protein edible fibrous structure. As an other example, an acidic potato protein solution is mixed with a CMC solution such that immediate fiber formation occurs.

In a specific aspect, the initial pH of the fiber-generating solution of non-denatured potato protein is above the isoelectric point of the protein. For example, the initial pH for Solanic300 is preferably above 7. The final pH of the fiber-generating solution (i.e. after acidification) is between pH 2 and pH 5, depending among others on the ionic strength, protein content, protein-CMC ratio, and other added ingredients in the initial fiber generating solution.

Accordingly, in one embodiment said acidifying is performed until a pH below 5, preferably in the range of pH 2-5, more preferably below pH 3. It was observed that a lower protein content seems to require a lower final pH. For example, with the same Protein/CMC ratio of 10:1, a solution of 1% TDM required a final pH of 2.2, whereas the solution of 10% TDM required only pH 4.5 as the final pH. Acidification is suitably performed using either a strong acid, such as hydrochloric acid, or a weak acid, such as lactic acid. Of course, the acid used is preferably a food grade acid.

It was found that a combination of mixing speed and acidification speed contribute to different fiber structure. Three levels of acidification were tested using Multipette® stream (Eppendorf) coupled with a 2.5 mL Combitips advanced® at dispensing speed level 1, 5, and 10. Three levels of mixing speed was tested: 200, 400, and 1000 rpm set on a magnetic stirring (IKAMAG™ RCT). Slow acidification rate with high stirring speed is more likely to form broken and weak fibers, while fast acidification rate with slow stirring speed may produce slimy fibers.

A medium acidification speed (dispensing level 5, Multipette® stream, Eppendorp, 2.5 mL Combitips advanced®) and a medium mixing speed (400 rpm, magnetic stirring, IKAMAG™ RCT) were chosen to apply in all the examples.

It is known that salt has a dissociating effect on all polyelectrolyte complexes. Also in the present invention, the ionic strength of the fiber-forming solution is an important parameter in fiber formation. According to the invention, the fiber forming step (i.e. the formation of the potato protein-CMC complex) is preferably performed at a conductivity of less than 10 mS/cm, preferably less than 8 mS/cm and more preferably less than 4.8 mS/cm. Notably, the conductivity of the potato plant waste effluent as used by Gonzalez et al., (Food Hydrocolloids Vol. 4 no. 5 pp.355-363, 1991) is typically above 10 mS/m, which further explains why no fibrous structures were formed when the effluent was contacted with CMC in order to recover potato protein by forming a protein-hydrocolloid complex.

Related to the conductivity is the salt concentration in the fiber forming solution. Generally speaking, the more NaCl is present, the more acid is needed to form a strong fiber complex. For example, the upper limit of NaCl is around 0.8% for a solution of 5% TDM at 10:1 Protein/CMC ratio. 1% NaCl resulted in no fibers at all. The NaCl concentration is preferably below 0.5%, and preferably below 0.2%. Accordingly, in a preferred embodiment the acidification / fiber forming step is performed in the presence of up to 0.6 wt% of NaCl, preferably up to 0.5 wt%, more preferably up to 0.2 wt% NaCl.

The fiber forming solution may comprise one or more further ingredients, for example an oil, a starch or a combination thereof.

The invention also relates to an edible protein-based fibrous structure obtainable by a method according to the invention. A further aspect provides the use of a fiber forming solution or an edible protein-based fibrous structure according to the invention in the manufacture of a food item, preferably a vegetarian or vegan food item.

Still further, the invention provides a food item comprising an edible protein-based fibrous structure as herein disclosed. The food item can but does not need to be a vegetarian or vegan food item. For example, a fibrous structure provided herein is advantageously incorporated in a food item selected from the group consisting of a meat substitute, a gluten-free bakery product, a cheese analog or an egg replacer. In a specific embodiment, the food item is a meat substitute, such as a chicken breast, chicken strip or sausage analog. It has been found that the fibrous structures as herein disclosed may also be used with natural meats as meat extenders.

LEGEND TO THE FIGURES

Figure 1: Overview of formed complexes with different potato protein isolates and variety of charged polysaccharides Clearly, the best fibrous structures are formed between a native potato protein isolate and CMC. In each picture, the size of the bar is 1 cm. For details, see Example 4.

Figure 2: Chicken soup comprising steam cooked fibrous structure of the invention as chicken breast analog.

Figure 3: Effect of NaCl concentration in the fiber-forming solution on the yield of fibrous structures formed. See also Example 7.

Figure 4: Non-fibrous, sedimented particles formed when reworking a prior art example on CMC-potato protein complexation. See Example 8. The size of the black bar is 1 cm in both the left and right panel.

EXPERIMENTAL SECTION

**Example 1: Isolation of non-denatured potato protein**

*LMW potato protein isolation method*

Potato effluent (PJ) 400 liter was obtained from the AVEBE starch plant in Gasselternijveen, NL. PJ was pre-treated by removing the bulk of the insoluble components using a Westfalia SAMR 3036 separator operated at a flow of 200 L/h and a discharge every 30 minutes. The clarified PJ remaining fraction of insoluble components was removed using a Larox filter (Larox type PF 0.1 H2). The filter was pre-coated by recirculating 150 grams of Dicalite 4158 (Dicalite Europe NV) and operated at 200 L/h with the clarified PJ. In total a volume of 250 litres filtered juice was collected in a 500 L Terlet vessel with stirrer and a cooling jacket with water at 14 °C. An amount of 200 ppm sodium bisulfite (Castor International BV) was added. The pH was adjusted to 6.0 using 33% NaOH (Brenntag).

Filtered PJ with a protein content of 12 g/l was loaded on a 3 column Simulated Moving Bed (SMB) setup. Each custom build PVC column (5.5 x 90 cm) has a resin bed height of 65 cm corresponding to a resin volume of 1.6 liter. The resin consisted of a benzoic acid functionalized methacrylate chromatography resin (Resindion). A quantity of 3.5 Bed Volumes (BV) of filtered PJ pH 6.0 was loaded on two columns in series in downwards flow rate of 15 l/hr. The run through was collected as LMW depleted PJ in a Terlet vessel cooled at 14 °C. The PJ in the first column was displaced to the second and third column with 1 BV water at 12l/hr flow rate followed by elution of the adsorbed proteins by 2.6 BV elution buffer (50 mM phosphoric acid (from 85% phosphoric acid, Brenntag)). Equilibration of the column took place using 2.8 BV 12 mM citrate at pH 6,0 (from citric acid monohydrate, RZBC and 33% NaOH, Brenntag). Elution and equilibration of the columns took place at a flowrate of 23l/hr. Based on UV280 signal (UVis-920, GE Healtcare) a peak of about 2.7 BV was collected as eluate containing LMW protein. This process was run for a period of about 22 hours until the 250l PJ was finished.

The original 250 liters PJ resulted in a volume of 190 liters LMW protein eluate with a protein content of 0.8 %. The eluate was concentrated to 10 °Brix using a Pall ultra-filtration (UF) unit containing Microza SIP-3013 module with a cutoff of 6000 Dalton. The unit was operated at an inlet pressure of 2.0 bars and outlet pressure of 0.5 bars. A softened water volume of 4 times the concentrate volume was added for dia-filtration. During the dia-filtration the pH of the protein solution was set at pH 7.5 by the addition of caustic. The material was further concentrated to 20°Brix or the minimum working volume of 7 liters of the UF. The concentrate was dried using an Anhydro Compact Spray dryer. The dryer was equipped with an atomizer wheel. The dryer was operated with an air inlet temperature of 175 °C and an air outlet temperature of 75 °C. A quantity of 1.1 kg low MW non-denatured (native) potato protein isolate powder (Solanic 300N) was obtained from the initial 250 Liter PJ.

*HMW potato protein isolation method:*

A volume of 250l LMW protein depleted PJ (6 g/l protein) was adjusted to pH 5.3 with hydrochloric acid and loaded on a 3 column Simulated Moving Bed (SMB) setup. Each custom build PVC column (5.5 x 90 cm) has a resin bed height of 65 cm corresponding to a resin volume of 1.6 liter. The resin consisted of a benzoic acid functionalized methacrylate chromatography resin (Resindion).

A quantity of 5.5 Bed Volumes (BV) of LMW depleted PJ pH 5.3 was loaded on two columns in series in downwards flow rate of 18l/hr. The PJ in the first column was displaced to the second and third column with 1 BV 12mM citrate pH 4.8 at 12l/hr followed by elution of the adsorbed proteins by 3.1 BV elution buffer (100 mM Phosphate buffer pH 8, Boom BV, NL) followed by equilibration of the column using 3.1 BV 12 mM citrate (citric acid monohydrate, RZBC and 33% NaOH, Brenntag). Elution and equilibration of the columns took place at a flowrate of 17l/hr. Based on UV280 signal (UVis-920, GE Healthcare) a peak of about 3.1 BV was collected in a Terlet vessel cooled at 14 °C as eluate containing HMW protein. This process was run for a period of about 21 hours until the 250l Depleted PJ was finished.

With the original 250 liters PJ a volume of 140 liters, HMW protein eluate with a protein content of 0.5 % was obtained. The eluate was concentrated to 20°Brix using a Pall ultra-filtration (UF) unit containing Microza SIP-3013 module with a cutoff of 6000 Dalton. The unit was operated at an inlet pressure of 2.0 bars and outlet pressure of 0.5 bars. The concentrate was dried using an Anhydro Compact Spray dryer. The dryer was equipped with an atomizer wheel. The dryer was operated with an air inlet temperature of 175 °C and an air outlet temperature of 75 °C. A quantity of 0.6 kg HMW non-denatured (native) potato protein powder was obtained from the initial 250 Liter LMW protein depleted PJ.

*Denatured potato protein isolation method:*

For the purpose of comparative examples, also a denatured potato protein isolate, Solanic 100, was obtained from potato juice. Potato juice was heat-coagulated at a temperature of 104 °C to obtain 12.9 gram solid protein particles/kg suspension. The protein particles were separated from the juice by means of a two-phase decanter at 4000 g. The coagulated protein obtained had a dry solid content of. 34 wt.%. The coagulated protein was resuspended in water and sulphuric acid was added until a pH of 3.3 was reached. After stirring for 30 minutes, the protein suspension was dewatered and washed by means of a vacuum belt filter. The coagulated protein was washed while monitoring the conductivity of the washing water. The washing water before use had a conductivity of 0.4 mS/cm, and washing was continued until the conductivity of the used washing water was below 1 mS/cm. The filter cake was dried by means of a flash dryer with an inlet/outlet temperature of 170 °C/80 °C, respectively. After drying, the water content was 4.5 wt.%.

**Example 2: CMC-Potato protein fibrous structure formation**

15 gram of native potato protein isolate S300N (see Example 1), is suspended in 85 gram of demineralized water in a conventional manner. A CMC solution is prepared by mixing 1.5g of CMC 4000 (Cekol®, CP Kelco) with 98.5 gram of demineralized water using Ultra-turrax (Silverson® 4R). 36.4 gram of potato protein solution, 36.4 gram of CMC 4000 solution and 7.3 gram demi water are thoroughly mixed. The mixed CMC 4000-potato protein solution contains a total dry matter content of 5% and protein to CMC ratio of 10:1. The CMC-potato protein solution is acidified with 0.5 milliliters of four molar hydrochloric acid with magnetic stirring (IKAMAG™ RCT) to generate a chunk of CMC-potato protein fibers. The final mixture had a pH of 4. The generated CMC-protein complex is collected using a lab test sieve with aperture of 1.00mm (Endecolts LTD, BS410/1986). The collected complex was washed with running tap water. The washed complex piece is compressed by hand to squeeze out excessive water. The formed fibrous chunk has a fibrous, chewy and elastic "meat-like" texture.

**Example 3: Selection of CMC**

To compare the effects of various CMC molecular weight on the ability to form fibrous CMC-potato protein fiber complex, 4 types of CMC were tested.

CMC-potato protein complex 1

Prepare 10% potato protein isolate solution (S300N) and 1.5% CMC 30 (Cekol®, CP Kelco) solution using Ultra-turrax in the way described in example 2. Take 36.4 gram of potato protein solution, 36.4 gram of CMC 30 solution and 7.3 gram demi water and thoroughly mixed therewith. The CMC-potato protein solution thereby is acidified with 0.5 milliliters of four molar hydrochloric acid with stirring to generate CMC-Potato protein complex.

CMC-potato protein complex 2

Prepare 10% potato protein isolate solution and 5% CMC 150 (Cekol®, CP Kelco) solution using Ultra-turrax in the way described in example 2. Take 36.4 gram of potato protein solution, 36.4 gram of CMC 150 solution and 7.3 gram demi water and thoroughly mixed therewith. The CMC-potato protein solution thereby is acidified with 0.5 milliliters of four molar hydrochloric acid with stirring to generate CMC-Potato protein complex.

CMC-potato protein complex 3

Same ingredient and process as described in Example 2.

CMC-potato protein complex 4

Prepare 10% potato protein isolate solution and 0.5% CMC 30000 (Cekol®, CP Kelco) solution using Ultra-turrax in the way described in example 2. Take 20 gram of potato protein solution, 8 gram of CMC 30000 solution and 52 gram demi water and thoroughly mixed therewith. The CMC-potato protein solution thereby is acidified with 0.5 milliliters of four molar hydrochloric acid with stirring to generate CMC-Potato protein complex.

The complex structure is described as presented in the following table 1:

| Sample | CMC $M_w$ (Da) | Description of complex |
|---|---|---|
| Complex 1<br>CMC 30 with potato protein | 80,000 | -- |
| Complex 2<br>CMC 150 with potato protein | 150,000 | + |
| Complex 3<br>CMC 4000 with potato protein | 450,000 | ++ |
| Complex 4<br>CMC 30000 with potato protein | 750,000 | ++ |

--: no fiber formation, only small particles/sedimentation/lumps formed
+/-: tiny/broken fiber is observed
+: fibrous structure, forming some fibrous bundles, can be easily torn apart
++: form a chunk of fibrous structure with big fibrous bundles, stretchable when tear.

These data indicate that CMC having a molecular weight of at least 150,000 Da is able to form a complex having a fibrous structure.

Example 4: Complex formation with other hydrocolloids

To test the ability of various anionic hydrocolloids to form fibrous complex with potato protein, Xanthan gum, CMC, sodium alginate, LM-pectin and i-carrageenan were tested. Besides, various potato protein isolate products such as S300N, S200 (native) and S100 (denatured) were tested and compared.

Sample 1 Potato protein (S300N) complex with Xanthan gum

10% Potato protein (S300N) solution was prepared using conventional method. 0.5% Xanthan (Keltrol® AP-F, CP Kelco) solution was prepared using Ultra-turrax. 120 gram of protein solution, 120 gram of Xanthan solution and 120 gram of demi water was then well mixed using magnetic stirrer. 2 gram of three molar Lactic acid was added to the mixed solution while stirring. Short broken fibres were formed almost immediately after the acids. The whole process generally took about 2-3 minutes.

Sample 2 Potato protein (S300N) complex with CMC

10% Potato protein (S300N) solution was prepared using conventional method. 0.5% CMC 30000 (CP Kelco CMC 30000) solution was prepared using Ultra-turrax. 120 gram of protein solution, 120 gram of CMC solution and 120 gram of demi water was then well mixed using magnetic stirrer. 2 gram of three molar Lactic acid was added to the mixed solution while stirring. Long elastic fibrous materials were formed almost immediately after the acids. The whole process generally took about 2-3 minutes.

Sample 3 Potato protein (S300N) complex with Sodium Alginate

5% Potato protein (S300N) solution was prepared using conventional method. 0.5% Sodium Alginate (VWR Chemicals, Prolabo®) solution was prepared using Ultra-turrax. 40 gram of protein solution, 40 gram of Sodium Alginate solution was then well mixed using magnetic stirrer. 2 gram of three molar Lactic acid was added to the mixed solution while stirring. Short fibrous materials were formed almost immediately after the acids. The whole process generally took about 2-3 minutes.

Sample 4 Potato protein (S300N) complex with LM-pectin

5% Potato protein (S300N) solution was prepared using conventional method. 0.5% LM-pectin (Genu® Pectin type LM-104AS-FS) solution was prepared using Ultra-turrax. 48 gram of protein solution is well mixed with 32 gram of LM-pectin solution using magnetic stirrer. After mixing the protein solution with LM-pectin solution, the pH of the system is around 7.5. 2 gram of three molar Lactic acid was added to the mixed solution while stirring. A sediment was formed almost immediately after the acids. The whole process generally took about 2-3 minutes.

Sample 5 Potato protein (S300N) with i-carrageenan

5% Potato protein (S300N) solution was prepared using conventional method. 0.5% i-carrageenan (Sigma®, i-carrageenan, commercial grade, type II) solution was prepared using Ultra-turrax. 48 gram of protein solution is well mixed with 32 gram of i-carrageenan solution using magnetic stirrer. 2 gram of three molar Lactic acid was added to the mixed solution while stirring. Small white complexes were formed almost immediately after the acids. The whole process generally took about 2-3 minutes.

Sample 6 Potato protein (S200) complex with Xanthan

10% Potato protein (S200) solution was prepared using conventional method. 0.5% Xanthan solution was prepared using Ultra-turrax. Complex was formed as described in the table below.

Sample 7 Potato protein (S200) complex with CMC

10% Potato protein (S200) solution was prepared using conventional method. 0.5% CMC 30000 solution was prepared using Ultra-turrax. Complex was formed as described in the table below.

Sample 8 Potato protein (S200) complex with Sodium alginate

5% Potato protein (S200) solution was prepared using conventional method. 0.5% Sodium alginate solution was prepared using Ultra-turrax. Complex was formed as described in the table below.

Sample 9 Potato protein (S200) with LM-pectin

5% Potato protein (S200) solution was prepared using conventional method. 0.5% LM-pectin solution was prepared using Ultra-turrax. Complex was formed as described in the table below.

Sample 10 Potato protein (S200) with i-carrageenan

5% Potato protein (S200) solution was prepared using conventional method. 0.5% i- carrageenan solution was prepared using Ultra-turrax. Complex was formed as described in the table below.

Sample 11 Potato protein (denatured, S100) with Xanthan

10% Potato protein (denatured, S100) was dispersed using conventional method. 0.5% Xanthan was prepared using Ultra-turrax. Complex was formed as described in the table below.

Sample 12 Potato protein (denatured, S100) with CMC

10% Potato protein (denatured, S100) solution was prepared using conventional method. 0.5% CMC 30000 solution was prepared using Ultra-turrax. Complex was formed as described in the table below.

Sample 13 Potato protein (denatured, S100) with Sodium Alginate

5% Potato protein (denatured, S100) solution was prepared using conventional method. 0.5% Sodium alginate solution was prepared using Ultra-turrax. Complex was formed as described in the table below.

Sample 14 Potato protein (denatured, S100) with LM-pectin

5% Potato protein (denatured, S100) solution was prepared using conventional method. 0.5% LM-pectin solution was prepared using Ultra-turrax. Complex was formed as described in table 2 below.

Table 2

| Sample | Fibrous structure | Description of complex |
|---|---|---|
| Sample 1<br>Native potato protein / Xanthan | + | short fiber, easy to tear apart |
| Sample 2<br>Native potato protein/ CMC 30000 | ++ | long fibrous bundle structure, elastic |
| Sample 3<br>Native potato protein /Sodium Alginate | + | short fiber, easy to tear apart |
| Sample 4<br>Native potato protein/ LM-pectin | -- | particle sediment |
| Sample 5<br>Native potato protein/ i-carrageenan | +/- | lump/white tiny fibrous complex |
| Sample 6<br>Native potato protein / Xanthan | +/- | slimy, transparent broken short fibers |
| Sample 7<br>Native potato protein / CMC 30000 | ++ | long fibrous bundle structure |
| Sample 8<br>Native potato protein / Sodium Alginate | -- | "pockets" |
| Sample 9<br>Native potato protein / LM-pectin | -- | particle sediment |
| Sample 10<br>Native potato protein / i-carrageenan | -- | "pockets" |
| Sample 11<br>Denatured potato protein /<br>Xanthan | -- | small flakes like particles |
| Sample 12<br>Denatured potato protein/ CMC30000 | -- | particle sediment (maybe protein itself) |
| Sample 13<br>Denatured potato protein / Sodium Alginate | -- | small flakes like particles |
| Sample 14<br>Denatured potato protein/ with LM-pectin | -- | small little lumps |

--: no fiber formation, only small particles/sedimentation/lumps formed
+/-: tiny/broken fiber is observed
+: fibrous structure, forming some fibrous bundles, can be easily torn apart
++: form a chunk of chicken meat like fibrous structure with big fibrous bundles, somewhat stretchable when tear. Only these structures resemble those of chicken breast.

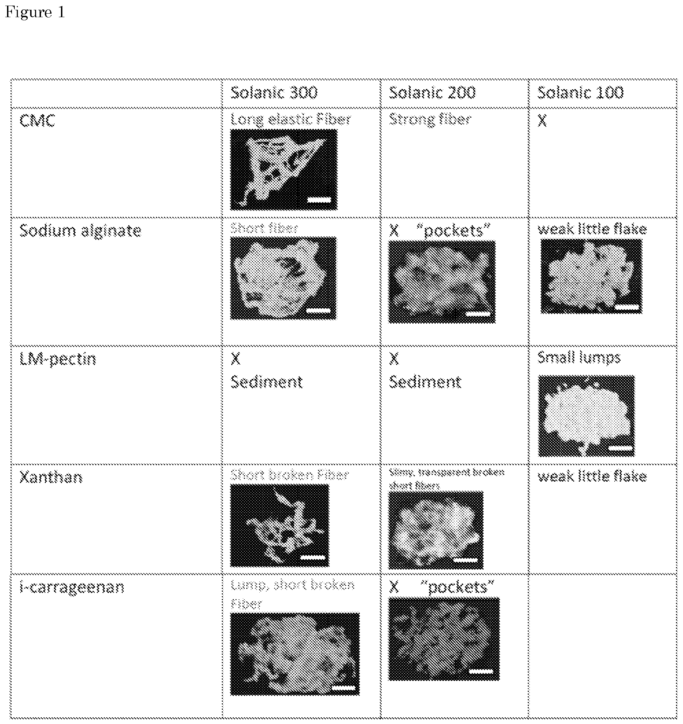

Figure 1 shows an overview of formed complexes with the different potato protein isolates and variety of charged polysaccharides. Clearly, the best fibrous structures are formed between a native potato protein isolate and CMC.

Example 5: Fiber formation required acidic conditions

In a method of the invention, acid conditions are required in order to form potato protein-CMC fibrous structure. An important aspect is that the final pH of the fiber forming solution is in the range of 2 to 5.

This example shows a direct comparison between two embodiments of the invention. In embodiment 1, the pH of the initial fiber forming solution is neutral (e.g. above 7) which is then acidified to a pH in the range of 2-5 by the addition of mineral or organic acids while mixing to allow for the formation of potato protein edible fibrous structure. In embodiment 2, the fiber forming solution is prepared by mixing an acidic potato protein solution having a pH below 5 with a solution of CMC to allow for the formation of potato protein edible fibrous structure.

To that end, a 10w% potato protein isolate solution (S300N) and 0.5% CMC 4000 solution are prepared as described in Example 2. Embodiment 1: take 120 g protein solution, 120 g CMC solution and 120 g demi water and mix thoroughly. Then add 4.5 g lactic acid solution while stirring to reach a final pH of 2.9. In embodiment 2, 120 g of potato protein solution is acidified to pH 3.4 using lactic acid. Then the protein solution and CMC solution are added into 120 g demi water while mixing thoroughly for at least 30 s. Immediate fiber formation occurs. Collection of the CMC-protein complex was done as described in Example 2.

The technical details of the two embodiments and the results obtained are summarized in Table 3 below.

Table 3

|  | Embodiment 1 | Embodiment 2 |
|---|---|---|
| Protein solution (10%)<br>CMC solution (0.5%)<br>Demi water<br>Total (dry solids) | 120 g (12 g dry)<br>120 g (0.6 g dry)<br>120 g<br>360 g (3.5%) | 120 g (12 g dry)<br>120 g (0.6 g dry)<br>120 g<br>360 g (3.5%) |
| Lactic acid (30%) | 4.5 g | Q.s. to acidify protein solution |
| **Results**<br>Yield<br>Initial pH protein solution<br>Final pH fiber forming solution | 24 g (wet)<br>8.6<br>2.9 | 16.8 g (wet)<br>3.4<br>3.6 |
| Observation | Fibrous and elastic structures | Long, fibrous and elastic structures. |

**Example 6: Chicken soup containing chicken breast analogues**

CMC 4000-potato protein fibrous complex was prepared in the same way as described in Example 2. The washed fibrous complex was gently pressed to remove excessive water, and subsequently steamed (Thermomix® TM31) for 5 minutes. The steam cooked fibrous complex was cut into small pieces with a size of approximately 1 cubic centimeter.

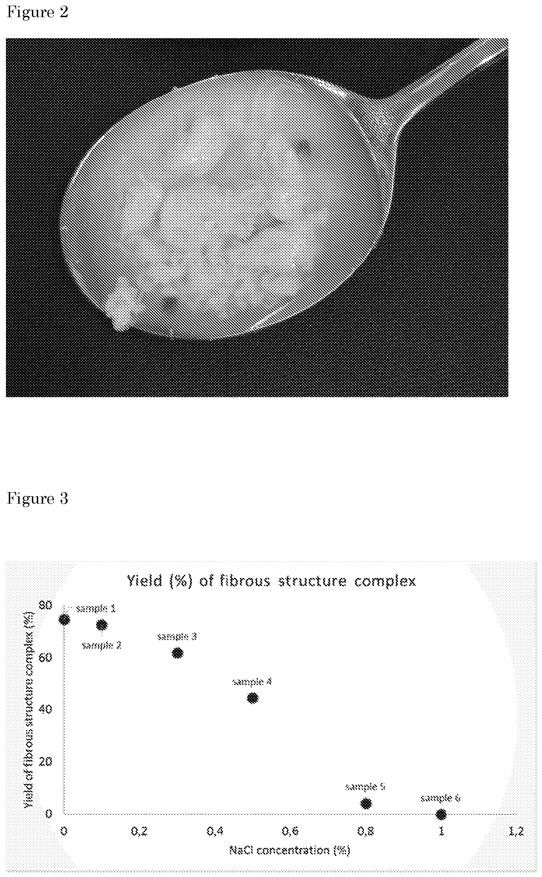

Five gram chicken soup powder (Hong Kong Gold Label Chicken Power, Knorr®) was added into 250g tap water and boiled on stove. The cut fibrous complex was added to the boiled chicken soup as "chicken breast analogues". Such added chicken breast analogues was found to have a similar texture as conventional cooked chicken breast. Figure 2 shows the CMC-potato protein fibrous complex as "Chicken breast analogues" in Chicken Soup.

Example 7 : Influence of Sodium Chloride concentration in the process

In this example it is investigated how the NaCl concentration can influence the yield of CMC-potato protein fibrous complex.

Sample No.1

CMC 4000-potato protein solution were prepared as described in Example 2, which contains 5% total dry matter content and protein to CMC of 10:1. The CMC-potato protein solution is acidified with 0.5 milliliters of four molar hydrochloric acid with stirring to generate CMC-Potato protein complex.

Sample No.2

Same CMC 4000-potato protein solution as described in Example 2, with extra 0.1% w/w sodium Chloride added. The CMC-potato protein-NaCl solution is acidified with 0.5 milliliters of four molar hydrochloric acid with stirring to generate CMC-Potato protein complex.

Sample No.3

Same CMC 4000-potato protein solution as described in Example 2, with extra 0.3% w/w sodium Chloride added. The CMC-potato protein-NaCl solution is acidified with 0.7 milliliters of four molar hydrochloric acid with stirring to generate CMC-Potato protein complex.

Sample No.4

Same CMC 4000-potato protein solution as described in Example 2, with extra 0.5% w/w sodium Chloride added. The CMC-potato protein-NaCl solution is acidified with 0.9 milliliters of four molar hydrochloric acid with stirring to generate CMC-Potato protein complex.

Sample No.5

Same CMC 4000-potato protein solution as described in Example 2, with extra 0.8% w/w sodium Chloride added. The CMC-potato protein-NaCl solution is acidified with 1.2 milliliters of four molar hydrochloric acid with stirring to generate CMC-Potato protein complex.

Sample No.6

Same CMC 4000-potato protein solution as described in Example 2, with extra 1% w/w Sodium Chloride added. The CMC-potato protein-NaCl solution is acidified with 1.5 milliliters of four molar hydrochloric acid with stirring to generate CMC-Potato protein complex.

The generated CMC-protein complex is collected using a lab test sieve with aperture of 1.00mm. The collected complex was washed with running tap water. The washed complex piece is compressed to squeeze out excessive water and dried in 50°C oven overnight. The weight of the oven-dried complexes were measured and yield was calculated as follows:

$$Yield\ of\ complex = \frac{weight\ of\ seived\ complexes\ being\ dried}{total\ dry\ matter\ content\ in\ CMC - protein - NaCl\ solution}$$

Yield of above six samples with varying NaCl concentration in the solution is calculated and plotted in Figure 3.

The results show that the presence of salt inhibits the formation of fibrous structure from CMC and potato protein. Salt, if needed in the final recipe, is recommended to add after the collection of fibrous structure.

**Example 8: Rework on prior art of CMC-potato protein complexation**

A complex of CMC-potato protein complex was previously reported by Gonzalez et al., (Food Hydrocolloids Vol. 4 no. 5 pp.355-363, 1991) relating to the recovery of protein from potato plant waste effluents by complexation with carboxymethylcellulose.

This example demonstrates that when reworking the process of Gonzalez et al. leads to CMC-potato protein complex which does not have a fibrous structure.

Fresh potato was bought from local supermarket. Fresh potato juice was made as described in the literature. 500g of potatoes were washed, peeled, cut into small cubes, mixed with 500g of water and slurried in a commercial blender (Braun, JB3060) at high speed for 1 minute. 0.5g of Sodium bisulfite was added to the slurry to control enzymatic browning. The slurry was first centrifuged at 3500 rpm at room temperature for 15 minutes (Mistral 6000, Beun de Ronde). The supernatant was then collected in 15ml centrifuge tubes and further centrifuge at 4500rpm for 15 minutes (Multifuge 1S-R) at room temperature to remove any remaining starch or particles. Supernatant was again collected and protein concentration was measured using calibrated Sprint Protein analyzer (CEM). According to the measured protein content, the supernatant was diluted to 1g protein/l to comply with the protein concentration used in the literature.

Diluted potato protein juice contains 1g/l potato protein and have a neutral pH of 6.2. CMC 4000 solution was prepared at 0.25% using ultraturrax (Silverson® 4R). 8g of CMC 4000 solution was added to 200ml potato juice to gain a CMC/protein ratio of 0.1. 1M HCl was added to the solution mixture with magnetic stirring, until solution pH drops to 3.5.

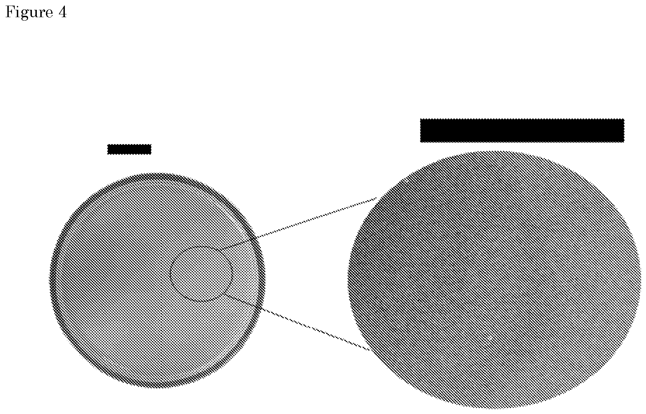

The generated CMC-potato protein complex was found as particle sediments as shown in Figure 4. Such complex does not have the fibrous structure aimed for in the present invention.

**Claims**

1. A method for the manufacture of an edible protein-based fibrous structure, comprising contacting an aqueous solution of a non-denatured potato protein with a carboxy methyl cellulose (CMC) having a Mw of at least 150,000 Dalton (Da) to yield a fiber forming solution, which fiber forming solution has a total dry matter (TDM) content in the range of 0.5 to 15%, and wherein said contacting is performed in the pH range of 2 to 5 and while mixing, thereby inducing the formation of a potato protein-based edible fibrous structure.

2. Method according to claim 1, comprising the steps of

- providing a fiber forming solution comprising non-denatured potato protein and CMC having a Mw of at least 150,000 Da and wherein said fiber forming solution has a TDM content in the range of 0.5 to 15%; and
- acidifying said fiber forming solution while mixing thereby inducing the formation of potato protein-based edible fibrous structure.

3. Method according to claim 1, comprising the steps of

- contacting an aqueous solution of a non-denatured potato protein having a pH range 2-5 with a CMC having a Mw of at least 150,000 Da to prepare a fiber forming solution having a TDM content in the range of 0.5 to 15%; and wherein said contacting is performed while mixing thereby inducing the formation of potato protein-based edible fibrous structure.

4. Method according to any one of claims 1-3, wherein said non-denatured potato protein comprises a low molecular weight potato protein isolate, preferably wherein said potato protein isolate has an isoelectric point above 5.5, preferably above 5.8, a molecular weight of below 35 kDa, preferably of 4- 30 kDa (as determined by SDS-PAGE), and a glycoalkaloid concentration of less than 300 ppm.

5. Method according to claim 4, wherein said low molecular weight potato protein isolate is obtainable by

- centrifuging a flocculated potato fruit juice, thereby forming a supernatant;
- subjecting the supernatant to adsorption chromatography operated at a pH of less than 11 and a temperature of 5-35 °C using a mixed-mode adsorbent capable of binding potato protein, thereby adsorbing the native potato protein to the adsorbent; and
- eluting the low molecular weight potato protein isolate.

6. Method according to any one of claims 1-5, wherein said CMC has a Mw of at least 400,000, preferably at least 500,000, more preferably at least 750,000.

7. Method according to claim 6, wherein said fiber forming solution comprises non-denatured potato protein and CMC in a relative weight ratio of 3:1 to 15:1, preferably 8:1 to 12:1.

8. Method according to any one of the preceding claims, wherein said fiber forming solution has a total dry matter (TDM) content in the range of 1 to 10%.

9. Method according to any one of the preceding claims, wherein said fiber forming solution has a conductivity of less than 10 mS/cm, preferably less than 8 mS/cm and more preferably less than 4.8 mS/cm.

10. Method according to any one of the preceding claims, wherein said mixing is performed in the presence of up to 0.6 wt% of NaCl, preferably up to 0.5 wt%, more preferably up to 0.2 wt% NaCl.

11. Method according to any one of the preceding claims, wherein said fiber forming solution comprises one or more further ingredients, preferably selected from oil and starches.

12. A fiber forming solution comprising non-denatured potato protein and carboxy methyl cellulose (CMC) having a Mw of at least 150,000, a pH in the range of 2-5 and a total dry matter (TDM) content in the range of 0.5 to 15%.

13. An edible protein-based fibrous structure obtainable by a method according to any one of claims 1-11.

14. A food item comprising an edible protein-based fibrous structure according to claim 13, preferably wherein the food item is a vegetarian or vegan food item.

15. The food item according to claim 14, selected from the group consisting of a meat substitute, a gluten-free bakery product, a cheese analog and an egg replacer.

16. The use of a fiber forming solution according to claim 12, or an edible protein-based fibrous structure according to claim 13 in the manufacture of a food item.

17. The use according to claim 16, wherein the food item is a vegetarian or vegan food item.


**Patentansprüche**

1. Verfahren zur Herstellung einer essbaren, auf Protein basierenden faserigen Struktur, umfassend Inkontaktbringen einer wässrigen Lösung eines nicht-denaturierten Kartoffelproteins mit einer Carboxymethylcellulose (CMC) mit einem Molekulargewicht (*Molecular weight* - Mw) von mindestens 150.000 Dalton (Da), um eine faserbildende Lösung zu erhalten, wobei die faserbildende Lösung einen Gesamt-Trockenmassegehalt (*total dry matter* - TDM) im Bereich von 0,5 bis 15 % hat, und wobei Inkontaktbringen im pH-Bereich von 2 bis 5 und unter Mischen durchgeführt wird, wodurch Bildung einer essbaren, auf Kartoffelprotein basierenden faserigen Struktur herbeigeführt wird.

2. Verfahren nach Anspruch 1, umfassend die Schritte von:

   - Bereitstellen einer faserbildenden Lösung, umfassend nicht-denaturiertes Kartoffelprotein und CMC mit einem Mw von mindestens 150.000 Da, und wobei die faserbildende Lösung einen TDM-Gehalt im Bereich von 0,5 bis 15 % hat; und
   - Ansäuern der faserbildenden Lösung unter Mischen, wodurch die Bildung von essbarer, auf Kartoffelprotein basierender, faseriger Struktur herbeigeführt wird.

3. Verfahren nach Anspruch 1, umfassend die Schritte von:

   - Inkontaktbringen einer wässrigen Lösung eines nicht-denaturierten Kartoffelproteins mit einem pH-Bereich von 2-5 mit einem CMC mit einem Mw von mindestens 150.000 Da, um eine faserbildende Lösung mit einem TDM-Gehalt im Bereich von 0,5 bis 15 % herzustellen; und wobei Inkontaktbringen unter Mischen durchgeführt wird, wodurch die Bildung einer essbaren, auf Kartoffelprotein basierenden, faserigen Struktur herbeigeführt wird.

4. Verfahren nach einem der Ansprüche 1 bis 3, wobei das nichtdenaturierte Kartoffelprotein ein Kartoffelproteinisolat mit niedrigem Molekulargewicht umfasst, wobei vorzugsweise das Kartoffelproteinisolat einen isoelektrischen Punkt über 5,5, vorzugsweise über 5,8, ein Molekulargewicht von unter 35 kDa, vorzugsweise von 4-30 kDa (wie durch SDS-PAGE bestimmt), und eine Glycoalkaloidkonzentration von weniger als 300 ppm hat.

5. Verfahren nach Anspruch 4, wobei das Kartoffelproteinisolat mit niedrigem Molekulargewicht erhältlich durch

   - Zentrifugieren eines ausgeflockten Kartoffelsaftes, wodurch ein Überstand gebildet wird;
   - Unterziehen des Überstands einer Adsorptionschromatographie, betrieben bei einem pH-Wert von weniger als 11 und einer Temperatur von 5 bis 35 °C, unter Verwendung eines Mischmodus-Adsorbens, geeignet, Kartoffelprotein zu binden, wodurch das native Kartoffelprotein an das Adsorbens adsorbiert wird; und
   - Eluieren des Kartoffelproteinisolats mit niedrigem Molekulargewicht.

6. Verfahren nach einem der Ansprüche 1 bis 5, wobei das CMC ein Mw von mindestens 400.000, vorzugsweise mindestens 500.000, stärker bevorzugt mindestens 750.000 hat.

7. Verfahren nach Anspruch 6, wobei die faserbildende Lösung nicht-denaturiertes Kartoffelprotein und CMC in einem relativen Gewichtsverhältnis von 3:1 bis 15:1, vorzugsweise 8:1 bis 12:1, umfasst.

8. Verfahren nach einem der vorstehenden Ansprüche, wobei die faserbildende Lösung einen Gesamt-Trockenmassegehalt (TDM) im Bereich von 1 bis 10 % hat.

9. Verfahren nach einem der vorstehenden Ansprüche, wobei die faserbildende Lösung eine Leitfähigkeit von weniger als 10 mS/cm, vorzugsweise weniger als 8 mS/cm und stärker bevorzugt weniger als 4,8 mS/cm aufweist.

10. Verfahren nach einem der vorstehenden Ansprüche, wobei das Mischen in Gegenwart von bis zu 0,6 Gew.-% NaCl, vorzugsweise bis zu 0,5 Gew.-%, stärker bevorzugt bis zu 0,2 Gew.-% NaCl, durchgeführt wird.

**11.** Verfahren nach einem der vorstehenden Ansprüche, wobei die faserbildende Lösung einen oder mehrere weitere Bestandteile umfasst, die vorzugsweise ausgewählt sind aus Öl und Stärken.

**12.** Faserbildende Lösung, umfassend nicht-denaturiertes Kartoffelprotein und Carboxymethylcellulose (CMC) mit einem Mw von mindestens 150.000, einem pH-Wert im Bereich von 2 bis 5 und einem Gesamt-Trockenmassegehalt (TDM) im Bereich von 0,5 bis 15 %.

**13.** Essbare, auf Protein basierende, faserige Struktur, die durch ein Verfahren nach einem der Ansprüche 1 bis 11 erhältlich.

**14.** Lebensmittel, umfassend eine essbare, auf Protein basierende, faserige Struktur nach Anspruch 13, wobei das Lebensmittel vorzugsweise ein vegetarisches oder veganes Lebensmittel ist.

**15.** Lebensmittel nach Anspruch 14, ausgewählt aus der Gruppe, bestehend aus einem Fleischersatz, einem glutenfreien Backprodukt, einem Käseersatz und einem Eiersatz.

**16.** Verwendung einer faserbildenden Lösung nach Anspruch 12 oder einer essbaren, auf Protein basierenden, faserigen Struktur nach Anspruch 13 zur Herstellung eines Lebensmittels.

**17.** Verwendung nach Anspruch 16, wobei das Lebensmittel ein vegetarisches oder veganes Lebensmittel ist.


**Revendications**

**1.** Procédé pour la fabrication d'une structure fibreuse à base de protéine comestible, comprenant la mise en contact d'une solution aqueuse d'une protéine de pomme de terre non dénaturée avec une carboxyméthylcellulose (CMC) ayant une Mw d'au moins 150 000 Daltons (Da) pour engendrer une solution formant des fibres, laquelle solution formant des fibres a une teneur en matière sèche totale (TDM) située dans la plage allant de 0,5 à 15 %, et dans lequel ladite mise en contact est effectuée dans la plage de pH allant de 2 à 5 et sous mélange, ce qui induit ainsi la formation d'une structure fibreuse comestible à base de protéine de pomme de terre.

**2.** Procédé selon la revendication 1, comprenant les étapes de

- fourniture d'une solution formant des fibres comprenant une protéine de pomme de terre non dénaturée et de la CMC ayant une Mw d'au moins 150 000 Da, laquelle solution formant des fibres a une teneur en TDM située dans la plage allant de 0,5 à 15 % ; et
- acidification de ladite solution formant des fibres sous mélange, ce qui induit ainsi la formation d'une structure fibreuse comestible à base de protéine de pomme de terre.

**3.** Procédé selon la revendication 1, comprenant les étapes de

- mise en contact d'une solution aqueuse d'une protéine de pomme de terre non dénaturée ayant un pH situé dans la plage allant de 2 à 5 avec une CMC ayant une Mw d'au moins 150 000 Da pour préparer une solution formant des fibres ayant une teneur en TDM située dans la plage allant de 0,5 à 15 % ; et

dans lequel ladite mise en contact est effectuée sous mélange, ce qui induit ainsi la formation d'une structure fibreuse comestible à base de protéine de pomme de terre.

**4.** Procédé selon l'une quelconque des revendications 1 à 3, dans lequel ladite protéine de pomme de terre non dénaturée comprend un isolat de protéine de pomme de terre de faible masse moléculaire, de préférence dans lequel ledit isolat de protéine de pomme de terre a un point isoélectrique supérieur à 5,5, de préférence supérieur à 5,8, une masse moléculaire inférieure à 35 kDa, de préférence de 4 à 30 kDa (telle que déterminée par SDS-PAGE), et une concentration en glyco-alcaloïdes inférieure à 300 ppm.

**5.** Procédé selon la revendication 4, dans lequel ledit isolat de protéine de pomme de terre de faible masse moléculaire peut être obtenu par

- centrifugation d'un jus de fruit de pomme de terre floculé, ce qui forme ainsi un surnageant ;

- soumission du surnageant à une chromatographie par adsorption effectuée à un pH inférieur à 11 et à une température de 5 à 35°C utilisant un adsorbant en mode mixte capable de lier une protéine de pomme de terre, moyennant quoi la protéine de pomme de terre native est adsorbée sur l'adsorbant ; et
- élution de l'isolat de protéine de pomme de terre de faible masse moléculaire.

6. Procédé selon l'une quelconque des revendications 1 à 5, dans lequel ladite CMC a une Mw d'au moins 400 000, de préférence d'au moins 500 000, mieux encore d'au moins 750 000.

7. Procédé selon la revendication 6, dans lequel ladite solution formant des fibres comprend une protéine de pomme de terre non dénaturée et de la CMC en un rapport en masse relatif de 3/1 à 15/1, de préférence de 8/1 à 12/1.

8. Procédé selon l'une quelconque des revendications précédentes, dans lequel ladite solution formant des fibres a une teneur en matière sèche totale (TDM) située dans la plage allant de 1 à 10 %.

9. Procédé selon l'une quelconque des revendications précédentes, dans lequel ladite solution formant des fibres a une conductivité inférieure à 10 mS/cm, de préférence inférieure à 8 mS/cm et mieux encore inférieure à 4,8 mS/cm.

10. Procédé selon l'une quelconque des revendications précédentes, dans lequel ledit mélange est effectué en présence de jusqu'à 0,6 % en poids de NaCl, de préférence jusqu'à 0,5 % en poids, mieux encore jusqu'à 0,2 % en poids de NaCl.

11. Procédé selon l'une quelconque des revendications précédentes, dans lequel ladite solution formant des fibres comprend un ou plusieurs autres ingrédients, de préférence choisis parmi une huile et les amidons.

12. Solution formant des fibres comprenant une protéine de pomme de terre non dénaturée et de la carboxyméthylcellulose (CMC) ayant une Mw d'au moins 150 000, un pH situé dans la plage allant de 2 à 5 et une teneur en matière sèche totale (TDM) située dans la plage allant de 0,5 à 15 %.

13. Structure fibreuse à base de protéine comestible pouvant être obtenue par un procédé selon l'une quelconque des revendications 1 à 11.

14. Denrée alimentaire comprenant une structure fibreuse à base de protéine comestible selon la revendication 13, de préférence laquelle denrée alimentaire est une denrée alimentaire végétarienne ou végétalienne.

15. Denrée alimentaire selon la revendication 14, choisie dans le groupe constitué par un substitut de viande, un produit de boulangerie sans gluten, un analogue de fromage et un succédané d'œuf.

16. Utilisation d'une solution formant des fibres selon la revendication 12, ou d'une structure fibreuse à base de protéine comestible selon la revendication 13, dans la fabrication d'une denrée alimentaire.

17. Utilisation selon la revendication 16, dans laquelle la denrée alimentaire est une denrée alimentaire végétarienne ou végétalienne.

Figure 1

| | Solanic 300 | Solanic 200 | Solanic 100 |
|---|---|---|---|
| CMC | Long elastic Fiber | Strong fiber | X |
| Sodium alginate | Short fiber | X "pockets" | weak little flake |
| LM-pectin | X Sediment | X Sediment | Small lumps |
| Xanthan | Short broken Fiber | Slimy, transparent broken short fibers | weak little flake |
| i-carrageenan | Lump, short broken Fiber | X "pockets" | |

Figure 2

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3792175 A
- US 4885179 A
- US 3829587 A

- WO 2014111103 A
- WO 2008069650 A, Lokra

**Non-patent literature cited in the description**

- **GONZALEZ et al.** *Food Hydrocolloids*, 1991, vol. 4 (5), 355-363